# EUROPEAN PATENT SPECIFICATION

(11) **EP 2 121 367 B1**
(45) Date of publication and mention of the grant of the patent: **20.11.2013**
(21) Application number: 08712786.6
(22) Date of filing: 06.02.2008
(51) Int. Cl.: B60K 15/077, F16K 31/08, F16K 24/04, F02M 37/00

(54) **VALVE ASSEMBLY FOR A FUEL TANK ARRANGEMENT AND FUEL TANK ARRANGEMENT**
VENTILANORDNUNG FÜR EINE KRAFTSTOFFBEHÄLTERANORDNUNG UND KRAFTSTOFFBEHÄLTERANORDNUNG
CLAPET POUR UN AGENCEMENT DE RESERVOIR DE CARBURANT ET AGENCEMENT DE RESERVOIR DE CARBURANT

(30) Priority: 26.02.2007 SE 0700481
(43) Date of publication of application: 25.11.2009
(73) Proprietor: Scania CV AB, 151 87 Södertälje (SE)
(72) Inventor: LILJEKVIST, Johan, S-118 47 Stockholm (SE)
(86) International application number: PCT/SE2008/050146
(87) International publication number: WO 2008/105720

(56) References cited:
- WO-A1-2004/009391
- WO-A1-2004/009391
- US-A- 4 750 522
- US-B1- 6 269 800
- US-B1- 6 273 131
- US-B1- 6 273 131

## Description

The invention relates to a valve assembly for a fuel tank arrangement of a vehicle and a corresponding fuel tank arrangement, wherein the valve assembly connects a first chamber of the fuel tank arrangement with a second chamber of said fuel tank arrangement, wherein said valve arrangement includes a valve ball, adapted to open and close a connection orifice between said two chambers in accordance with the actual fuel level within the fuel tank arrangement.

Such a fuel tank arrangement is known from US 6,273,131 B1. In order to prevent an excessive sucking-in of air to the combustion engine, in particular during low filling conditions of a fuel tank or when a vehicle is operated at a slope, this prior art document discloses to arrange a reserve pot within the fuel tank. The reserve pot is filled with fuel by utilising the flow of return fuel coming from the combustion engine. The valve arrangement according to this prior art document permits fuel entering the reserve pot and prevents an outflow of fuel through a connection opening into the main tank.

US 6,269,800 B1 discloses a similar solution. However, in this solution the valve ball is replaced by a collecting cup pivotably arranged approximate to the connection orifice. The collecting cup permits an inflow of fuel into the reserve pot but prevents an outflow of fuel out of the reserve pot through the connection orifice.

WO 2004/009391 A1 describes a fuel tank being divided into separate compartments by means of partitioning walls. The partitioning walls include openings which are partially provided with back valves in order to guarantee that certain amount of fuel is maintained in certain compartments.

It is the object of the present invention to provide a simplified and reliable valve assembly in a fuel tank arrangement allowing a fuel flow from one chamber to other independence on certain filling conditions.

This object is solved by a valve assembly for a fuel tank arrangement of a vehicle connecting a first chamber of said fuel tank arrangement with a second chamber of said fuel tank arrangement, wherein said valve arrangement includes a valve ball, adapted to open and close a connection orifice between said two chambers in accordance with the actual fuel level within the fuel tank arrangement. The invention further provides that said valve ball is magnetized and that said valve arrangement further includes a control ball having a density lower than the stored fuel and being magnetized, such that said valve ball and said control ball attract each other by magnetic forces. According to the invention, the control ball merely acts as a position control for the valve ball. Due to the magnetic forces attracting the balls to one another, the valve ball which has a neutral buoyancy therefore moves in accordance with the fuel level at the control ball and opens or closes the connection orifice based on its position. The arrangement according to the invention does not need any additional control means, as e.g. jet pumps according to the prior art documents US 6,273,131 or US 2,269,800.

In order to provide predefined movements of said valve ball and said control ball, both, said valve ball and said control ball are received in associated guide ducts respectively. These guide ducts can be provided by corresponding perforated guide formations within the fuel tank arrangement. These guide ducts must permit an easier access of the fuel to the control ball and to the valve ball.

According to a further embodiment of the invention, said valve ball together with its associated guide duct is arranged in said first chamber and said control ball together with its associated guide duct is arranged in said second chamber. In particular, said valve ball is movable between an upper position and a lower position, wherein it closes said connection orifice in its lower position. Thus, the control ball takes its position in accordance to the fuel level prevailing in said second chamber of the fuel tank arrangement. Thus, in accordance with the filling state of this second chamber, the valve assembly takes its open position or its closed position at the connection orifice. Thereby, it is possible to allow an inflow of fluid from the second chamber into the first chamber as long as said valve ball releases the connection orifice. Moreover, the valve assembly prevents an outflow of fuel from the first chamber into the second chamber in low filling conditions in the second chamber due to the fact that in such situation, the valve ball closes the connection orifice.

According to a further embodiment of the invention, said valve ball closes a filling passage connecting said first chamber with a third chamber of said fuel tank in its upper position.

The invention further relates to a fuel tank arrangement for a vehicle including a first chamber and a second chamber connected to one another by means of a connection orifice, having a valve assembly according to the above description. Said first chamber can be formed as a fuel pick-up compartment, wherein fuel is collected before it is pumped to the combustion engine. Said second chamber can be formed as main tank compartment, receiving the major part of the fuel filled into the fuel tank arrangement at a gas station.

Moreover, according to a further embodiment of the invention, the fuel tank arrangement may further comprise a third chamber, which can be formed as a catch tank arranged above said first chamber, i.e. above said fuel pick-up compartment, wherein said third chamber is connected to said first chamber by a filling passage. Such a structure of a fuel tank providing a catch tank is used such that when filling the fuel tank arrangement at a gas station, fuel first pours into the catch tank and then after reaching a certain filling state spills over into the main tank. As long as the main tank is in a sufficiently filled condition, the control ball is in its upper position and holds the valve ball also in its upper position. Thereby, fuel can flow from the main tank into the fuel pick-up compartment from where it can be sucked out via a supply line to the combustion engine. As soon as the fuel level within the main tank falls to a level where the control ball takes its lower position and thereby the magnetically attracted valve ball also takes its lower position, the connection orifice is closed. This can be reached due to a lower filling state in the main tank or due to the fact that the vehicle is operated at a slope such that the fuel level in the main tank does not reach the control ball anymore. In such a situation, the valve ball closes the connection orifice between the pick-up compartment and said main tank. However, it opens the filling passage between the catch tank and the fuel pick-up compartment. Therefore, the remaining fuel held within the catch tank can pour into the fuel pick-up compartment on demand.

Thus, with a simply structured valve assembly arranged in a corresponding fuel tank arrangement, a reliable fuel supply to a combustion engine can be provided by preventing an excessive sucking of air.

In the following, an embodiment of the invention is described with regard to the figures, wherein
- Fig.1: shows a schematic view of a part of a fuel tank arrangement including a valve assembly according to the invention;
- Fig.2: shows an operational state of the fuel tank arrangement according to fig.1 with a high filling condition in the main tank; and
- Fig.3: shows an operational state with a low filling condition in the main tank.

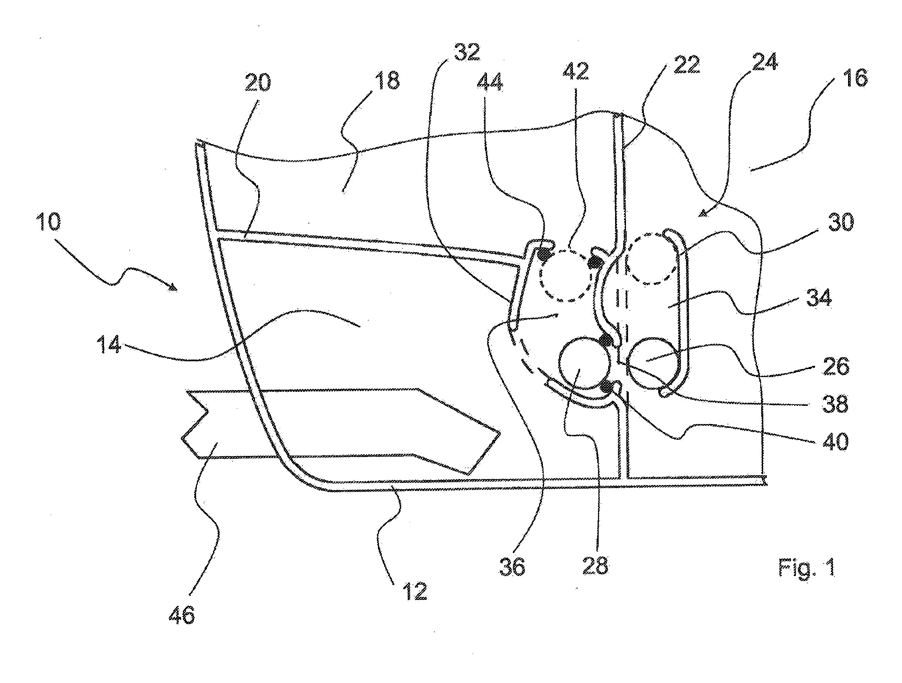

Fig.1 shows an edge portion of a fuel tank arrangement 10 according to one embodiment of the invention. The fuel tank arrangement 10 includes a fuel tank having an outer wall 12. The fuel tank is divided in three chambers, namely a first chamber 14, in the following called fuel pick-up compartment, a second chamber 16, in the following called main tank compartment, and a third chamber 18, in the following called catch tank.

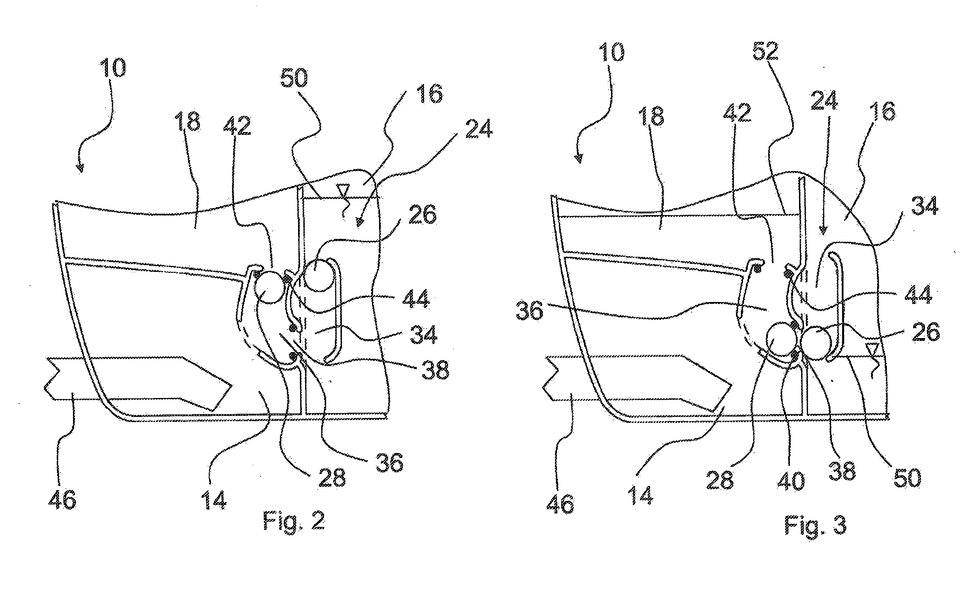

The three chambers 14, 16 and 18 are separated by partition walls 20 and 22, which are arranged within the fuel tank 10. At the crossing region of the two partition walls 20 and 22, a valve assembly 24 according to the invention is arranged. The valve assembly 24 includes a control ball 26 and a valve ball 28. The control ball 26 has a lower density then the fuel stored within the fuel tank arrangement 10. This means that the control ball 26 tends to swim on the fuel surface within the main tank compartment 16, as will be discussed in detail with regard to figures 2 and 3. The valve ball 28 has a neutral buoyancy, that means that there is no substantial tendency - except for the gravity - that the valve ball 28 rises or sinks within the fuel.

Both, the control ball 26 and valve ball 28 are magnetized such that they attract each other by magnetic forces. This means, that the two balls tend to take the closest position to one another as possible. However, it is to be stated that the buoyancy of the control ball 26 within the fuel overcomes the attraction forces such that the control ball 26 tends to rise and fall (move) with the fuel level within the main tank 16 as far as possible.

The valve assembly 24 is provided with wall portions 30 and 32, which are partially interrupted as shown by dashed lines. The wall portions 30 and 32 together with the partition wall 22 form guide ducts 34 and 36 for the control ball 26 and the valve ball 28, respectively. The guide duct 34 allows a movement of the control ball 26 between the lower position and an upper position shown with dashed lines. The guide duct 36 allows a movement of the valve ball 28 from its lower position to a upper position also shown with dashed lines.

The guide duct 36 ends at its lower region at a connection orifice 38 which is provided with a sealing ring 40. The connection orifice 38 is the only direct fluidic connection between the main tank 16 and the fuel pick-up compartment 14. At the upper end of the guide duct 36, a filling passage 42 is provided which is also surrounded by a rubber sealing ring 44. The filling passage 42 is the only direct fluidic connection between the catch tank 18 and the fuel pick-up compartment 14.

Moreover, fig.1 shows a pick-up hose 46, having an open end within the fuel pick-up compartment 14 and leading to a non-depicted fuel pump which is adapted to suck fuel out from the fuel pick-up compartment 14 and transfer it to a vehicle combustion engine.

In the following, the operation of the valve assembly 24 according to the invention is described with regard to figs.2 and 3.

Fig.2 shows the fuel tank arrangement 10, wherein in said main tank compartment 16 a filling state prevails such that the fuel level 50 is substantially above the highest position of the control ball 26, as predetermined by the geometry of the guide duct 34. The control ball 26 thus takes its highest position due to its lower density compared to the density of said fuel and the resulting lifting forces. The valve ball 28, which as neutral buoyancy is also held in its upper position due to the magnetic attraction forces between the control ball 26 and the valve ball 28. The valve ball 28 in this condition is held in abutment with the sealing ring 44, whereby a fuel flow from the fuel pick-up compartment 40 into the catch tank compartment 18 is prevented. The filling passage 42 is therefore closed by the valve ball 28.

The connection orifice 38, however, is free due to the fact that the valve ball 28 is held in its highest position. Therefore, a fuel flow from the main tank compartment 16 into the fuel pick-up compartment 14 through the connection orifice 38 is possible. In such a filling condition, fuel can be sucked out of the fuel pick-up compartment 14 by means of the pick-up hose 46, whereby the fuel pick-up compartment 14 is supplied with fuel from the main tank compartment 16.

After a certain operation period with fuel consumption and/or due the fact that the vehicle is operated at a slope, the level 15 of the fuel contained within the main tank compartment 16 falls. Fig.3 shows an operation state, wherein the fuel level 15 is in a region of said lower end of the guide duct 34 close to the connection orifice 38. Thus, the control ball 26 has taken its lowest position within the guide duct 34. Due to the neutral buoyancy and the magnetic attraction forces between the control ball 26 and the valve ball 28, the valve ball 28 has also taken its lowest position within the guide duct 36 and therefore now closes the connection orifice 38. The valve ball 28 is in sealing engagement with the sealing ring 40 surrounding the connection orifice 38. In contrast thereto, the filling passage 42 is free and open. Therefore, fuel from the catch tank compartment 18, which has a higher level 52 than the fuel level 50 in the main tank 16, can flow from the catch tank compartment 18 into the fuel pick-up compartment 14. An outflow of fuel from the fuel pick-up compartment 14 into the main tank compartment 16 is prevented by the fact that the valve ball 28 closes the connection orifice 38. Thus, as long as there is sufficient fuel within the catch tank compartment 18 to be supplied to the fuel pick-up compartment 14, it can be guaranteed, that no air is sucked with the suction hose 46 to the fuel pump and therefore to the combustion engine.

The invention shows a fuel tank arrangement 10 with a valve assembly 24 having a simple structure and a reliable function for preventing an excessive sucking of air from the fuel tank arrangement to the fuel pump of the engine.

## Claims

1. Valve assembly (24) for a fuel tank arrangement (10) of a vehicle, connecting a first chamber (14) of said fuel tank arrangement (10) with a second chamber (16) of said fuel tank arrangement (10), wherein said valve arrangement (24) includes a valve ball (28), adapted to open and close a connection orifice (38) between said two chambers (14, 16) in accordance with the actual fuel level (50) within said fuel tank arrangement (10),
**characterized in that** said valve ball (28) is magnetized and that said valve assembly (24) further includes a control ball (26) having a density lower than the density of the stored fuel and being magnetized, such that said valve ball (28) and said control ball (26) attract each other by magnetic forces.

2. Valve assembly (24) according to claim 1,
**characterized in that** said valve ball (28) and said control ball (26) are received in associated guide ducts (34, 36), respectively.

3. Valve assembly (24) according to claim 1 or 2,
**characterized in that** said valve ball (28) together with its associated guide duct (36) is arranged in said first chamber (14) and said control ball (26) together with its associated guide duct (36) is arranged in said second chamber (16).

4. Valve assembly (24) according to one of the preceding claims,
**characterized in that** said valve ball (28) is movable between an upper position and a lower position, wherein it closes said connection orifice (38) in its lower position.

5. Valve assembly (24) according to claim 4,
**characterized in that** said valve ball (28) closes a filling passage (42) connecting said first chamber (14) with a third chamber (18) of said fuel tank arrangement (10) in its upper position.

6. Fuel tank arrangement (10) for a vehicle including a first chamber (14) and a second chamber (16) connected to one each other by means of a connection orifice (38),
**characterized by** a valve assembly (14) according to one of the preceding claims.

7. Fuel tank arrangement (10) according to claim 6,
**characterized in that** said first chamber (14) is a fuel pick-up compartment and that said second chamber (16) is a main tank compartment.

8. Fuel tank arrangement (10) according to claim 6 or 7,
**characterized by** a third chamber (18), wherein said third chamber is a catch tank arranged above said first chamber (14) and is connected to said first chamber (14) by a filling passage (42).

## Patentansprüche

1. Ventilanordnung (24) für eine Kraftstofftankanordnung (10) eines Fahrzeugs, welche eine erste Kammer (14) der Kraftstofftankanordnung (10) mit einer zweiten Kammer (16) der Kraftstofftankanordnung (10) verbindet, wobei die Ventilanordnung (24) eine Ventilkugel (28) umfasst, die dazu eingerichtet ist, eine Verbindungsöffnung (38) zwischen den beiden Kammern (14, 16) entsprechend dem tatsächlichen Kraftstofffüllstand (50) innerhalb der Kraftstofftankanordnung (10) zu öffnen und zu schließen,
**dadurch gekennzeichnet, dass** die Ventilkugel (28) magnetisiert Ist und dass die Ventilanordnung (24) ferner eine Kontrollkugel (26) umfasst, welche eine Dichte aufweist, die geringer Ist als die Dichte des gespeicherten Kraftstoffs, und welche derart magnetisiert Ist, dass die Ventilkugel (28) und die Kontrollkugel (26) sich gegenseitig über magnetische Kräfte anziehen.

2. Ventilanordnung (24) nach Anspruch 1,
**dadurch gekennzeichnet, dass** die Ventilkugel (28) und die Kontrollkugel (26) in ihnen jeweils zugeordneten Führungsgängen (34, 36) aufgenommen sind.

3. Ventilanordnung (24) nach Anspruch 1 oder 2,
**dadurch gekennzeichnet, dass** die Ventilkugel (28) zusammen mit dem ihr zugeordneten Führungsgang (36) in der ersten Kammer (14) angeordnet Ist und die Kontrollkugel (26) zusammen mit dem Ihr zugeordneten Führungsgang (36) In der zweiten Kammer (16) angeordnet ist.

4. Ventilanordnung (24) nach einem der vorangehenden Ansprüche,
**dadurch gekennzeichnet, dass** die Ventilkugel (28) zwischen einer oberen Position und einer unteren Position beweglich ist, wobei sie die Verbindungsöffnung (38) in ihrer unteren Stellung schließt.

5. Ventilanordnung (24) nach Anspruch 4,
**dadurch gekennzeichnet, dass** die Ventilkugel (28) einen Fülldurchgang (42) In ihrer oberen Stellung schließt, der die erste Kammer (14) mit einer dritten Kammer (18) der Kraftstofftankanordnung (10) verbindet.

6. Kraftstofftankanordnung (10) für ein Fahrzeug, umfassend eine erste Kammer (14) und eine zweite Kammer (16), die miteinander mittels einer Verbindungsöffnung (38) verbunden sind,
**gekennzeichnet durch** eine Ventilanordnung (14) nach einem der vorangehenden Ansprüche.

7. Kraftstofftankanordnung (10) nach Anspruch 6,
**dadurch gekennzeichnet, dass** die erste Kammer (14) ein Krafsstoffentnahmeabteil ist und dass die zweite Kammer (16) ein Haupttankabtell ist.

8. Kraftstofftankanordnung (10) nach Anspruch 6 oder 7,
**gekennzeichnet durch** eine dritte Kammer (18), wobei die dritte Kammer ein Auffangtank Ist, der über der ersten Kammer (14) angeordnet ist und mit der ersten Kammer (14) über einen Fülldurchgang (42) verbunden Ist.

## Revendications

1. Ensemble de vanne (24) pour un agencement de réservoir de carburant (10) d'un véhicule, reliant une première chambre (14) dudit agencement de réservoir de carburant (10) à une deuxième chambre (16) dudit agencement de réservoir de carburant (10), ledit agencement de vanne (24) comprenant une bille de vanne (28), adaptée de façon à ouvrir et à fermer un orifice de liaison (38) entre lesdites deux chambres (14, 16) en fonction du niveau de carburant réel (50) à l'intérieur dudit agencement de réservoir de carburant (10),
**caractérisé en ce que** ladite bille de vanne (28) est magnétisée et **en ce que** ledit ensemble de vanne (24) comprend de plus une vanne de commande (26) ayant une densité inférieure à la densité du carburant stocké, et qui est magnétisée, de telle sorte que ladite bille de vanne (28) et ladite bille de commande (26) s'attirent mutuellement par des forces magnétiques.

2. Ensemble de vanne (24) selon la revendication 1,
**caractérisé en ce que** ladite bille de vanne (28) et ladite bille de commande (26) sont reçues dans des conduits de guidage associés (34, 36), respectivement.

3. Ensemble de vanne (24) selon la revendication 1 ou 2,
**caractérisé en ce que** ladite bille de vanne (28), avec son conduit de guidage associé (36), est disposée dans ladite première chambre (14), et **en ce que** ladite bille de commande (26), avec son conduit de guidage associé (36), est disposée dans ladite deuxième chambre (16).

4. Ensemble de vanne (24) selon l'une des revendications précédentes,
**caractérisé en ce que** ladite bille de vanne (28) est mobile entre une position supérieure et une position inférieure, dans laquelle elle ferme ledit orifice de liaison (38) dans sa position inférieure.

5. Ensemble de vanne (24) selon la revendication 4,
**caractérisé en ce que** ladite bille de vanne (28) ferme un passage de remplissage (42) reliant ladite première chambre (14) à une troisième chambre (18) dudit agencement de réservoir de carburant (10) dans sa position supérieure.

6. Agencement de réservoir de carburant (10) pour un véhicule, comprenant une première chambre (14) et une deuxième chambre (16) reliées l'une à l'autre à l'aide d'un orifice de liaison (38),
**caractérisé par** un ensemble de vanne (24) selon l'une des revendications précédentes.

7. Agencement de réservoir de carburant (10) selon la revendication 6,
**caractérisé en ce que** ladite première chambre (14) est un compartiment de prise de carburant et **en ce que** ladite deuxième chambre (16) est un compartiment de réservoir principal.

8. Agencement de réservoir de carburant (10) selon la revendication 6 ou 7,
**caractérisé par** une troisième chambre (18), dans lequel ladite troisième chambre est un réservoir de prise disposé au-dessus de ladite première chambre (14), et étant reliée à ladite première chambre (14) par un passage de remplissage (42).
